Europäisches Patentamt

European Patent Office

Office européen des brevets

(11) Publication number: **0 333 288**
**A1**

# EUROPEAN PATENT APPLICATION

(21) Application number: 89200642.0

(51) Int. Cl.⁴: **A23C 1/04** , **A23C 11/04**

(22) Date of filing: 14.03.89

(30) Priority: 15.03.88 NL 8800629

(43) Date of publication of application:
20.09.89 Bulletin 89/38

(84) Designated Contracting States:
BE DE FR GB NL

(71) Applicant: **Verenigde Coöperatieve Melkindustrie Coberco B.A.**
**Nieuwstad 69**
**NL-7201 NM Zutphen(NL)**

(72) Inventor: **De Koning, Jacobus**
**Gentiaan 10**
**NL-7443 GW Nijverdal(NL)**

(74) Representative: **Smulders, Theodorus A.H.J., Ir. et al**
**Vereenigde Octrooibureaux Nieuwe Parklaan 107**
**NL-2587 BP 's-Gravenhage(NL)**

(54) Spray dried milk powder product and process for its preparation.

(57) This invention relates to spray dried milk powder products and to processes for the preparation thereof. The spray dried milk powder products according to the invention comprise 25-90% by weight of skim milk components, 10-75% by weight of fat and possibly up to 25% by weight of other edible components. The $D_{50}$ of the fat in the powder is in excess of 3.0 $\mu$m. To produce such a powder, a mixture is used for the spray drying process, in which a portion of the fat is in the solid state.

# Spray dried milk powder product and process for its preparation.

It is generally assumed that when milk powder dried in a modern manner is dissolved, the product is virtually equivalent to the original milk raw material. Indeed, there are a number of arguments to support this opinion. The solubility of such a powder is so good that there need be virtually no difference relative to milk.

Also, in a properly conducted spray drying process the heat load to which the milk is subjected is so low that, for most uses, there is no essential difference between normal pasteurized milk and reconstituted milk powder.

At first sight, it can be stated that the chemical composition of dissolved milk powder does not substantially differ from that of milk.

When, however, the physical composition of dissolved powder is regarded, an important difference is noted, namely, the dispersity of the milk fat.

The fat distribution can be defined by the volume average particle size D50, which indicates that 50% of the fat is present in particles having a diameter smaller than D50. In natural milk, the D50 is typically about 3.5 to 4.0 $\mu$m. The precise value depends, among other factors, on the cattle breed that produced the milk and the lactation stage. In spray dried whole-milk powder, however, the fat is finely-divided in the powder particles. The D50 is typically 2 $\mu$m (see Netherlands Milk Dairy Journal 25, 1971, 151-158) with a maximum value of about 2.3 $\mu$m and a minimum value of about 1 $\mu$m. If no particular measures are taken against the reduction in size of the fat globules, the shear forces in the sprayer of the spray dryer will result in such a change in dispersity that the above value of about 2.0 $\mu$m is reached. When still finer fat distribution is desirable, as is the case for various uses of milk powder, such as the preparation of yoghurt from reconstituted milk powder, the milk is homogenized either before or after the pre-concentration; in such cases a lower D50 value is realized.

Accordingly, in existing milk powders, the D50 of the fat is roughly half the D50 in natural milk. The fat surface area is then four times as large. There is quite some knowledge about the results of homogenizing treatments on the structure of milk and other emulsions. As far as milk is concerned, it can be stated in general that the larger fat surface area resulting from homogenizing treatments is covered with protein present in milk. The natural membrane surrounding the fat is thus disturbed. This membrane contains a large number of particular substances, such as phospholipids and enzymes, which are of great significance in various areas, such as food and colloidal properties; they can be called biologically important milk components.

The above difference in the size distribution of fat globules is of great economic significance. This concerns the uses of milk powder in food in a very wide field. In the applications of fat containing milk powders, the fat present always has a given functionality. The functional properties of such a disperse fat phase depend, inter alia, on the size distribution of the emulsion and on the nature of the stabilizing factors, in particular the coverage of the surface of the emulsion droplets. Viewed against this background, it is clear that the above difference in the size distribution of fat globules certainly has a practical and economic importance.

It is an object of the present invention to provide a milk powder product in which the fat is present, as much as possible, in the form in which it is present in milk. In relation therewith, it is an object of the invention to be able to regulate the size distribution of the fat in a spray dried milk powder product in such a manner that the emulsion is coarser than in current milk powder products.

From experiments it has now been found that a spray dried whole-milk powder with a coarser fat dispersion can be prepared by causing the spraying to be effected in such conditions that a considerable portion of the fat in the pre-concentrated milk product to be dried is in the solid state.

The invention is in the first place embodied in a spray dried milk powder product comprising 25-90% by weight of skim-milk components, 10-75% by weight of fat and 0-25% by weight of other edible components, with at least 50% by volume of the fat globules in the powder having a diameter in excess of 3.0 $\mu$m, preferably even a diameter in excess of 4.0$\mu$ m.

Depending on the contemplated use, the spray dried milk powder product may contain the most diverse kinds of other edible components, such as coco products (e.g., cocoa powder, cocoa mass), sugars, starch, proteins, cereal products (such as malt extract), flavours, etc. The powder may be intended, for example, for reconstitution to form milk or milk-like products, such as cocoa, or be used as a starting material in the preparation of milk choclate. The composition of the powder is largely dictated by the contemplated use. Generally speaking, the powder will have a fat content of 20-40% by weight, with a fat content of 24-30 % by weight being highly preferable.

In principle, the fat present in the powder need not be milk fat. For some applications it may be desirable for the powder to contain a different kind of fat, for example, a vegetable fat (the term fat is used herein in its broad meaning and thus includes oils). For most uses, however, it is preferable that the fat present in the powder is milk fat.

A preferred embodiment of the spray dried milk powder product according to this invention comprises 70-76% by weight of skim milk components and 24-30% by weight of milk fat.

The spray dried milk powder products according to the invention compare favourably with known spray dried milk powder products in that they contain fat with a higher D50 value, which in the case of milk fat can easily be brought to 4-6 $\mu$m, and when other fats are used can be increased to values as high as 10 $\mu$m and higher. In addition to the advantage that it is thus possible to achieve a reconstituted product bearing a greater resemblance to a similar product on the basis of normal pasteurized milk, it is possible to realize properties desirable for various uses, such as foam destabilizing and viscosity reducing effects. Thus, for example, the use of a spray dried milk powder product according to the invention in the preparation of milk chocolate results in a smaller quantity of cocoa-butter being required, which is an expensive raw material.

The invention is further embodied in a process for preparing a spray dried milk powder product as described above, which comprises spray drying a mixture in which a portion of the fat is in the solid state.

The process of the present invention, according to which a mixture is spray dried in which a portion of the fat is in the solid state, can be carried out in various ways.

In the simplest embodiment, the milk, standardized to the desired fat and protein content, is concentrated by vacuum evaporation, as conventional, to for example 50% of dry solids,and then cooled to a temperature in which the milk fat is crystallized as to a considerable portion in a reasonably short period of time. For this purpose, the concentrated milk may be cooled to below 20°C, such as 15°C or 5°C, or possibly stored at that temperature. After the crystallization period, the contentrated milk is spray dried, with the temperature of the concentrated milk being permitted to increase only slightly up to the moment of spraying. It is then certain that during the spraying the fat is still in the crystalline state as to a considerable part. During the subsequent drying, which commonly includes using hot drying air of temperatures in excess of 80°C, and possibly even in excess of 200°C, the sprayed concentrated milk will rise in temperature, but owing to the absence of substantial shearing forces, this is not accompanied by a significant reduction in size of the fat emulsion.

In another embodiment of the invention, the decreamed milk is concentrated and subsequently cooled (if necessary while flowing), and sprayed at a low temperature. The fat required is now added to the concentrated skim milk immediately before spraying, in the form of cream that has already been cooled for some time, so that the fat has been crystallized as to a considerable part.

Finally, there is an embodiment in which the cream to be added is composed of (possibly pre-concentrated) decreamed milk and pure fat. In this case the fat can be freely selected from milk fat, vegetable fats and the like, and the D50 of the cream can also be adjusted by a suitable selection of the emulsifying conditions. A variant of this process comprises the direct emulsification of a fat in the already concentrated skim milk.

We prefer, however, a process in which a milk concentrate is cooled so that a portion of the fat present therein is crystallized and the resulting mixture, containing fat in the solid form, is spray dried, and a process in which the mixture to be spray dried is composed from a cooled concentrate of decreamed milk and a cream cooled so that a portion of the fat present therein has crystallized.

For that matter, French patent 1,283,859 describes a process for preparing a fat-containing product, and refers to a cooled milk concentrate and a spray drying step. The object of this prior process is, however, to bring about a physical separation between high melting fats (which are brought into the solid state) and low melting fats to produce a powder having better wetting properties. For this purpose the concentrate to be spray dried must be cooled to a temperature of 24°C, and preferably homogenized at that temperature before a conventional spray drying treatment is carried out. According to the present process, however, the concentrate is not homogenized and cooled sufficiently to prevent a fractionation of the fat dispersion during further processing. The invention leads to a product having relatively coarse fat globules, as appears from the relatively high D50 value. Such a product is not obtained by the process described in the above French patent.

Furthermore, European patent application 0,223,872 discloses a process for preparing a milk powder in which a cold product is spray dried. The product concerned, however, contains crystallized lactose and highly homogenized fat. The European patent application does not refer to a pre-treatment of the concentrate to be spray dried such that a portion of the fat present therein is crystallized, so that the ultimate spray dried powder contains unusually coarse fat particles.

British patent 899,908 discloses a process for preparing a spray dried milk powder which, for the spray drying process, uses drying air with a relatively low temperature of, for example, as low as 15°C. The process described does not, however, include spraying a cooled concentrate in which a portion of the fat is present in the solid state in order to produce a milk powder product containing relatively coarse fat particles. The present process includes using hot drying air (in excess of 80°C, e.g. 180°C) for the spray drying treatment.

The invention is illustrated in and by the following examples.

Example 1

300 l of milk standardized to 3.4% fat was concentrated by vacuum evaporation to 46% solids and subsequently cooled in the flowing state to 9°C. At this temperature the concentrated milk was stored for 20 h. Thereafter the concentrated milk was supplied to an APV-Anhydro spray dryer at a temperature of no more than 12°C and sprayed. The drying conditions of the spray dryer were normal (air inlet 180°C, air outlet temperature 80°C). The resulting whole milk powder, with a moisture content of 2.5% and a fat content of 26.5% was dissolved in water, and the D50 of the fat was determined to be 3.6 μm. The particle size was measured by means of a Particle Size Analyser of Malvern. This measurement is based on the detection of the forward light diffraction pattern. For comparison, milk powder was made in the conventional manner, i.e., without cooling, from the same batch of concentrated milk. The resulting milk powder had a moisture content of 2.7% and a fat content of 26.4%. The powder was dissolved in water, and the D50 of the fat was measured by the Particle Size Analyser and found to be 2.0 μm.

Example 2

500 l milk with a fat content of 1.4% was concentrated in a vacuum falling film evaporator to 43% solids and immediately thereafter cooled to 6°C and stored at this temperature for 15 h. This concentrate was passed to the wheel sprayer in the drying tower, whereby the temperature of the concentrate increased by 3°C. Drying conditions were normal (air inlet 185°C, air outlet 85°C). The resulting, partially decreamed milk powder had a moisture content of 2.9% and a fat content of 12.8%. The D50 was 3.5 μm.

Example 3

100 l cream containing 40% fat was cooled to 6°C and stored for 36 h. Subsequently, 1010 l of decreamed milk was evaporated to 43% solids and cooled to 10°C, then mixed with the cream and immediately thereafter spray dried to a powder containing 3.0% moisture and 28.0% fat.

The D50 of the fat in the resulting powder was 3.8 μm.

For comparison, powder was made in the same manner, except that just prior to spraying the concentrated mixture was heated to 60°C. The D50 of the fat in the resulting powder was now 1.7 μm.

Example 4

200 l decreamed milk was evaporated to 37% solids. 6.8 kg coconut fat, with a temperature of 50°C and emulsified with a high-rate mixer to a D50 of 12 μm, was added. The concentrate was cooled to 20°C and kept at this temperature for 2 h. Thereafter the product was spray dried, avoiding raising the temperature of the concentrate up to spraying. The fat in the resulting powder had a D50 of 12 μm.

## Claims

1. Spray dried milk powder product comprising 25-90% by weight of skim milk components, 10-75% by weight of fat and 0-25% by weight of other edible components, with at least 50% by volume of the fat globules in the powder having a diameter in excess of 3.0 μm.

2. Spray dried milk powder product as claimed in claim 1, characterized in that the fat content is 20-40% by weight.

3. Spray dried milk powder product as claimed in claim 1, characterized in that the fat content is 24-30% by weight.

4. Spray dried milk powder product as claimed in claim 1, characterized by comprising 70-76% by weight of skim milk components and 24-30% by weight of milk fat.

5. Spray dried milk powder product as claimed in any of claims 1-4, characterized in that at least 50% by volume of the fat globules in the powder have a diameter in excess of 4.0 μm.

6. A process for preparing a spray dried milk powder product as claimed in any of claims 1-5, which comprises spray drying a mixture in which a portion of the fat is in the solid state.

7. A process as claimed in claim 6, characterized by cooling a milk concentrate so that a portion of the fat present therein is crystallized, and spray drying the resulting mixture containing fat in the solid state.

8. A process as claimed in claim 6, characterized in that the mixture to be spray dried is composed of a cooled concentrate of decreamed milk and a cream cooled in such a manner that a portion of the fat present therein has crystallized.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 892 880 (E. GROLITSCH) * Claims 1-12; column 8, lines 26-32; examples 1,5 * | 1,5 | A 23 C 1/04 A 23 C 11/04 |
| E | EP-A-0 310 459 (J. KERGOMARD) * Claims 1,4,5,8,13; examples * | 1-4,6 | |
| D,A | FR-A-1 283 859 (CARNATION CO.) * Abstract points A1,B6,7,9; page 2, column 2 - page 4, column 2 * | 1,6,8 | |
| D,A | EP-A-0 223 872 (SOCIETE DES PRODUITS NESTLE S.A.) * Claims 1,5,8; page 3, lines 7-29; example 1 * | 1-4,6,8 | |
| D,A | GB-A- 899 908 (BIRS BRIT AG) | | |
| D,A | NETHERLANDS MILK & DAIRY JOURNAL, vol. 25, 1971, pages 151-158; T.J. BUMA: "Free fat in spray-dried whole milk. 9. The size distribution of fat globules in concentrated milk and in spray-dried milk" | | TECHNICAL FIELDS SEARCHED (Int. Cl.4)  A 23 C A 23 G |

The present search report has been drawn up for all claims

| Place of search | Date of completion of the search | Examiner |
|---|---|---|
| THE HAGUE | 20-06-1989 | DESMEDT G.R.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)